# EUROPÄISCHE PATENTSCHRIFT

(11) **EP 0 753 614 B1**
(45) Veröffentlichungstag und Bekanntmachung des Hinweises auf die Patenterteilung: **10.05.2000**
(21) Anmeldenummer: 96810389.5
(22) Anmeldetag: 12.06.1996
(51) Int. Cl.: D05B 19/10, D05B 19/08, G05B 19/10

(54) **Verfahren zur Gestaltung des Programmspeichers einer elektronischen Nähmaschine, Nähmaschine zur Durchführung dieses Verfahrens und Anwendung der Nähmaschine**
Method for the configuration of the program memory of an electronic sewing machine, sewing machine for carrying out this method and application of the sewing machine
Procédé pour la configuration de la mémoire de programme d'une machine à coudre électronique, machine à coudre pour la mise en oeuvre de ce procédé et application de la machine à coudre

(30) Priorität: 14.07.1995 CH 208795
(43) Veröffentlichungstag der Anmeldung: 15.01.1997
(73) Patentinhaber: FRITZ GEGAUF AG BERNINA-NÄHMASCHINENFABRIK, CH-8266 Steckborn (CH)
(72) Erfinder: Hausammann, Erich, 8272 Ermatingen (CH); Vogel, Hanspeter, 8266 Steckborn (CH)
(74) Vertreter: AMMANN PATENTANWAELTE AG BERN

(56) Entgegenhaltungen:
- EP-A- 0 134 046
- EP-A- 0 276 629
- EP-A- 0 475 885
- EP-A- 0 501 092
- EP-A- 0 518 816
- DE-A- 2 949 207
- DE-C- 4 135 472

## Beschreibung

Die vorliegende Erfindung betrifft ein Verfahren gemäss Oberbegriffs des Anspruchs 1. Die Programmspeicher bekannter elektronischer Nähmaschinen werden vollständig mit Daten zum Nähen bestimmter Sticharten bzw. Stichmuster besetzt, d.h. die Speicherkapazität wird voll genutzt, um möglichst viele vorgegebene oder mindestens teilweise auch änderbaren Daten zur Gestaltung von Näharbeiten zur Verfügung zu stellen.

Es ist zwar bekannt, die in der Nähmaschine gespeicherten Daten zu ergänzen durch zusätzliche Daten, die auf einem durch die Nähmaschine lesbaren Datenträger vorhanden sind (EP-A-0 276 629). Diese Datenträger sind aber mit ganz bestimmten vorgegebenen Daten versehen und stellen der Anwenderin eine entsprechend beschränkte Auswahl zusätzlicher Sticharten oder Stichmuster zur Verfügung, von welchen sie vielleicht den grössten Teil nicht benutzt und somit auch nicht wünscht.

Es ist ferner eine Vorrichtung bekannt (EP-A-0 518 816), welche im Gehäuse einer elektronisch gesteuerten Nähmaschine integriert ist und zur Erstellung von Nah- und Stichmustern dient. Diese Vorrichtung enthält veränderliche, digitale Speicher, in denen Näh- und Stichmustern gespeichert werden können, und eine Anschlussmöglichkeit für einen externen Speicher, einen Computer, usw., um solche Muster extern zu speichern und/oder in die Vorrichtung zu laden.

Es ist auch bekannt, Daten zur Steuerung einer Nähmaschine oder Stickmaschine auf einer Datenverarbeitungsanlage vorzubereiten und über eine Schnittstelle der Näh- oder Stickmaschine einzugeben (US-A-5,218,916 und US-A-5,282,142). Es handelt sich hier aber eher um industrielle Anlagen ohne fest vorgegebene Stich- bzw. Stichmusterdaten in einem Speicher der Maschine. Eine derartige Anlage eignet sich nicht als Haushaltmaschine wo im Idealfalle alle benötigten Daten in der Maschine selbst abgespeichert sind und ohne zusätzliche Gerätschaften gewählt werden können.

Ziel vorliegender Erfindung ist es daher, eine bedienungsfreundliche, den Bedürfnissen der Benützerin optimal angepasste Nähmaschine zur Verfügung zu stellen. Dieses Ziel wird gemäss dem Kennzeichen des Anspruchs 1 erreicht. Bei der Herstellung der Maschine werden somit die Daten für die gängigsten Sticharten wie Geradstich und Zickzackstich und einige gebräuchliche Stichmuster fest eingespeichert, aber es bleiben Speicherplätze leer oder jedenfalls veränderbar um nachträglich über eine oder mehrere Schnittstellen der Nähmaschine zusätzliche Daten einzuspeichern bzw. gespeicherte Daten zu ersetzen durch solche, die den individiuellen Wünschen und Bedürfnissen der Benützerin entsprechen. Die gewünschten Daten werden einer vollständigen Datensammlung der Maschinenherstellerin oder einer anderen Anbieterin entnommen, vorzugsweise in einer Datenverarbeitungseinrichtung zusammengestellt und anschliessend in den Speicher der Nähmaschine übertragen. Je nach Bedienungsoberfläche der Nähmaschine kann gleichzeitig auch die Anzeige der den einzuspeichernden Daten entsprechenden Muster oder Sticharten erfolgen oder aber diese Anzeige kann auf der Datenverarbeitungseinrichtung, beispielsweise einem PC angezeigt werden. Es ist aber auch möglich, eine Stichmustertafel auszudrucken, die an der Nähmaschine angebracht werden kann und eine einfache Wahl der gewünschten Stichmuster erlaubt. Es besteht dabei auch die Möglichkeit, die individuell gespeicherten Stichmuster von Zeit zu Zeit zu ändern und damit den persönlichen Bedürfnissen oder der Mode anzupassen. Ist aber einmal die Abspeicherung bzw. der Ersatz der eingespeicherten Daten abgeschlossen, ist die Nähmaschine völlig autonom und so zu bedienen, wie jede herkömmliche Haushaltnähmaschine, in welcher alle verfügbaren Daten abgespeichert sind.

Die Erfindung betrifft auch eine Nähmaschine gemäss Anspruch 6 zur Durchführung des erwähnten Verfahrens.

Die Erfindung betrifft schliesslich auch eine Anwendung der Nähmaschine gemäss Anspruch 14.

Die Erfindung wird nun anhand zweier in der Zeichnung dargestellter Ausführungsbeispiele der erfindungsgemässen Nähmaschine näher erläutert.
- Figur 1: zeigt eine elektronische Nähmaschine mit graphischem Bildschirm und mehreren Datenschnittstellen,
- Figur 2: zeigt eine einfachere elektronische Nähmaschine mit sequentieller Stichmusterwahl, Diodenanzeige und Datenschnittstelle für PC-Anschluss,
- Figur 3: zeigt einen vergrösserten Ausschnitt aus Figur 2,
- Figur 4: zeigt eine Stichmustertafel zur Verwendung auf dem rechten Teil der Wähl- und Anzeigefläche der Maschine nach Figur 3,
- Figur 5: zeigt ein Blockdiagramm der Hardware-Konfiguration, eine Näh- oder Stickmaschine gemäss Figur 1 und der zugeordneten externen Datenverarbeitungsvorrichtung,
- Figur 6: zeigt ein Blockdiagramm der Hardware-Konfiguration einer einfacher ausgestatteten Näh- oder Stickmaschine gemäss Figur 2 und der zugeordneten externen Datenverarbeitungsvorrichtung und
- Figur 7: zeigt ein Flussdiagramm zur Verdeutlichung des Verfahrensablaufs.

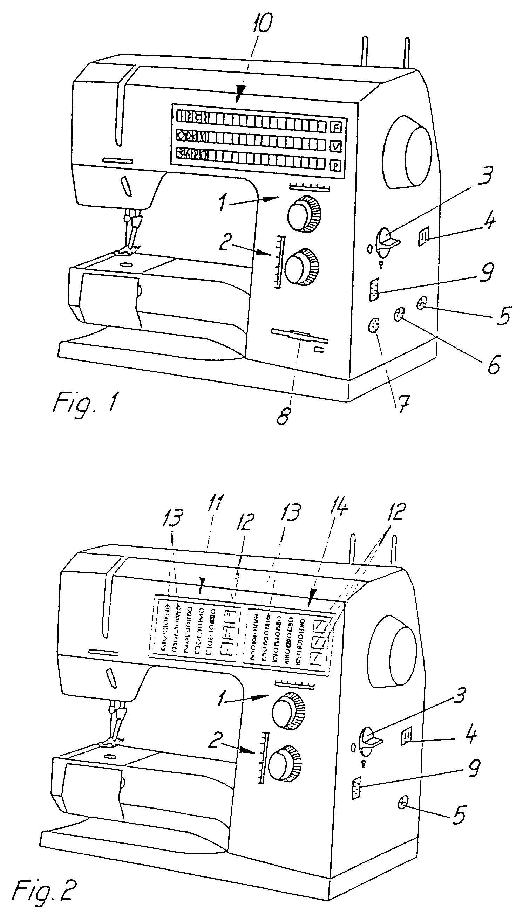

Die Nähmaschine nach Figur 1 weist die üblichen, teils nicht näher bezeichneten Nähorgane, Bedienungsorgane und sonstigen Ausrüstungsteile auf, darunter die üblichen Organe und Anzeigen 1 und 2 zur individuellen Stichbreiten- und Stichlängeneinstellung, einen Hauptschalter 3, einen Netzanschluss 4 und einen Anschluss 5 für einen Fussanlasser. Soweit entspricht die Ausrüstung derjenigen üblicher elektronischer oder elektrischer Nähmaschinen. Darüber hinaus weist die Nähmaschine einen PC-Anschluss 6, einen Anschluss 7 für einen Scanner, eine Maus oder dergleichen und ein Disketten- oder ein CD-Laufwerk auf, von welchem in Figur 1 die Oeffnung 8 zum Einführen der Diskette bzw. CD sichtbar ist. Ferner ist ein Anschluss 9 für ein Datenschlüssel vorgesehen. Die Nähmaschine weist ferner einen Bildschirm 10 auf, mit drei Zeilen von Feldern zur Anzeige von Sticharten und Stichmustern. In der obersten mit F bezeichneten Zeile werden fest einprogrammierte Sticharten und häufig benutzte Stichmuster, beispielsweise Geradstich, Zickzackstich und dergleichen, angezeigt, in der mittleren mit V bezeichneten Zeile werden variable Stichmuster angezeigt, deren Daten in der Maschine gespeichert sind oder nachträglich ab zugekauften Datenträgern eingespeichert wurden und in der untersten mit P bezeichneten Zeile werden persönliche, individuell ausgewählte Stichmuster in beliebiger Zusammenstellung angezeigt. Die Wahl der gewünschten Sticharten oder Stichmuster kann in üblicher Weise mittels Cursor oder direkt auf einer Folientastatur erfolgen, wobei das gewählte Muster jeweils invers dargestellt ist. Es sind aber auch andere Wähl- und Anzeigemöglichkeiten denkbar.

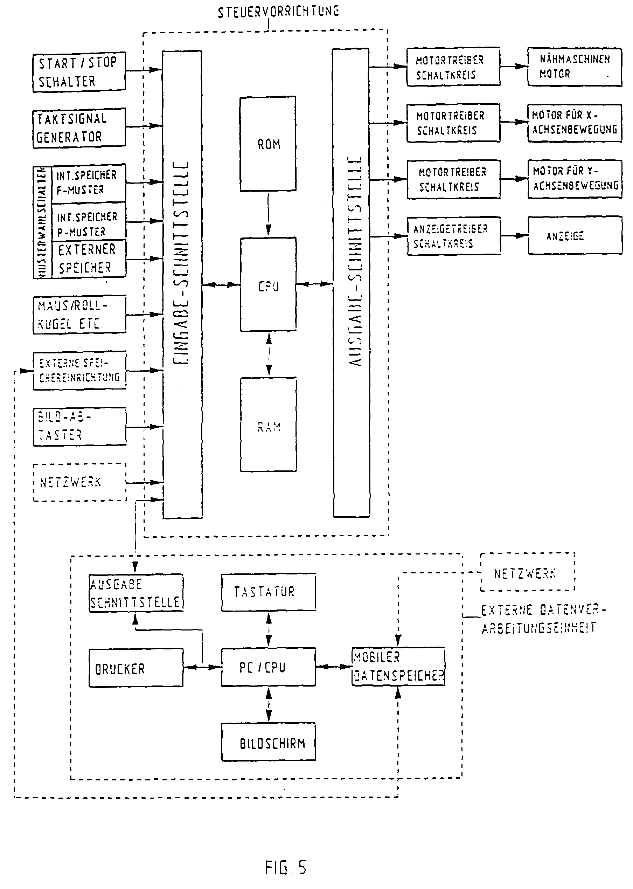

Ueber die Anschlüsse 6, 7 und 9 bzw. mittels des Laufwerks 8 können die nicht fest einprogrammierten Sticharten und Stichmuster nach persönlichen Wünschen eingespeichert bzw. geändert werden. Die Nähmaschine wird also vom Hersteller nur mit den fest einprogrammierten Daten für bestimmte Sticharten und Stichmuster ausgeliefert und die Käuferin kann dann nach eigenen Wünschen und Vorstellungen zusätzliche Daten für bestimmte Sticharten und Stichmuster einspeichern, bzw. einspeichern lassen. Dieses Einspeichern kann vorzugsweise durch den Maschinenhändler erfolgen, der über eine entsprechend grosse Auswahl an verfügbaren Daten auf einem geeigneten Datenträger verfügt, und die gewünschten Daten auswählen und einspeichern kann. Es ist aber auch denkbar, Daten aus einer Datenbank der Herstellerin oder eines sonstigen Anbieters abzurufen und einzuspeichern. In jedem Fall dient zur Bereitstellung und Einspeicherung der Daten vorzugsweise eine externe Datenverarbeitungseinheit, beispielsweise ein PC mit geeignetem Programm. Figur 5 zeigt ein Ausführungsbeispiel der Bausteine einerseits der elektronischen Steuervorrichtung der Nähmaschine und andererseits einer zugeordneten externen Datenverarbeitungseinheit. Die Funktionen der einzelnen Anlageteile bzw. des ganzen Aggregates ergeben sich weitgehend aus der Beschriftung in Figur 5. Es sei lediglich darauf hingewiesen, dass die Nähmaschine einen Festspeicher ROM und einen veränderbaren Speicher RAM aufweist, in welchen die Daten der fest eingespeicherten Sticharten und Stichmuster bzw. die Daten der auswechselbaren veränderbaren Sticharten und Stichmuster in den verfügbaren Speicherplätzen eingespeichert sind. Wie in Figur 5 dargestellt, kann ein externer Speicher, beispielsweise der oben erwähnte, mit dem Anschluss 9 verbundene Datenschlüssel vorgesehen sein. Die externe Speichereinrichtung und der mobile Datenspeicher der Datenverarbeitungseinheit können Anschlussmöglichkeiten für CD-ROMs oder PC-Disketten darstellen. Der Netzwerkanschluss, der in Fig. 5 gestrichelt und somit als fakultative Möglichkeit angedeutet ist, bedeutet, dass in eine Nähmaschine mit genügend ausgebautem Mikroprozessor die Einspeicherung direkt ab einem hierzu geeigneten Netzwerk erfolgen könnte. Es kann auch ein Bildabtaster angeschlossen werden, welcher gestattet, Stichmusterdaten von einer vorhandenen Abbildung zu erzeugen und einzuspeichern.

Wie erwähnt erfolgt die Bereitstellung und das Einspeichern der gewünschten Daten normalerweise mittels einer zugeordneten externen Datenverarbeitungseinheit, beispielsweise dem dargestellten PC mit Bildschirm und Tastatur und einem zugeordneten Drucker. Wie angedeutet können die Stich- bzw. Stichmusterdaten einem mobilen Datenspeicher oder direkt einem Netzwerk entnommen, aufbereitet, zusammengestellt und dann über die Ausgabeschnittstelle in den veränderbaren Speicher RAM der Nähmaschine eingespeichert werden. Wie erwähnt, kann jedoch die Eingabeschnittstelle und die Zentraleinheit CPU der Nähmaschine so gestaltet sein, dass über ein entsprechendes Netzwerk direkt Stich- oder Stichmusterdaten von einer Datenbank abgerufen und eingespeichert werden können. Heute ist jedoch der Besitz eines PC derart verbreitet, dass in vielen Fällen mit einem zusätzlichen Programm für den ohnehin vorhandenen PC auszukommen ist.

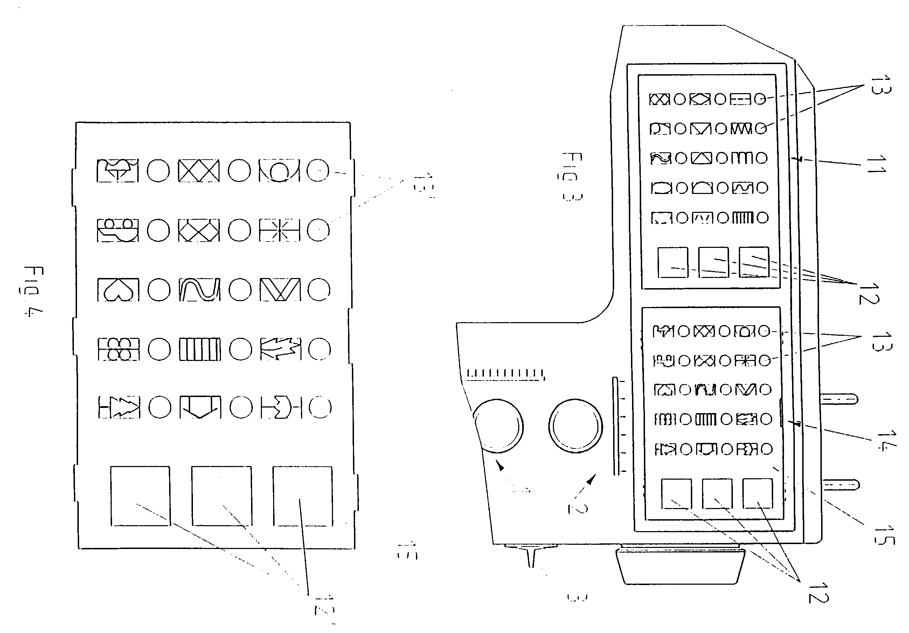

Figur 2 zeigt eine etwas einfachere Nähmaschine. Entsprechende Teile sind gleich bezeichnet wie in Figur 1. Zur Eingabe von Stich- oder Stichmusterdaten ist lediglich der Anschlusse 9 für einen Datenschlüssel vorhanden. Die Anzeige ist hier aufgeteilt in das links liegende Anzeigefeld 11 auf welchem die fest einprogrammierten Sticharten und Stichmuster dargestellt sind. Die einzelnen Sticharten oder Stichmuster können beispielsweise mittels Tasten 12 sequentiell gewählt werden, und die gewählte Stichart oder das gewählte Stichmuster wird mittels Leuchtdioden 13 angezeigt. Das rechte Feld 14 dient der Anzeige und Wahl der individuell einprogrammierten Stichmuster, die ebenfalls mittels Tasten 12 gewählt und mittels Leuchtdioden 13 angezeigt werden können. Die Anzeige der Stichmuster auf dem Feld 14 der Maschine erfolgt vorzugsweise oder wahlweise mittels einer Stichmustertafel 15, die in den Figuren 3 und 4 in grösserem Massstab dargestellt ist. Diese Stichmustertafel kann in bestimmter Lage an der Nähmaschine lösbar befestigt werden und zwar so, dass Oeffnungen 13' über den Leuchtdioden der Nähmaschine und Fenster 12' über den Wähltasten 12 der Nähmaschine liegen. Entsprechend können dann durch Tastendruck bestimmte auf der Stichmustertafel 15 dargestellte Stichmuster angewählt und aktiviert werden, und das gewählte Stichmuster wird durch die zugeordnete Leuchtdiode als gewählt angezeigt.

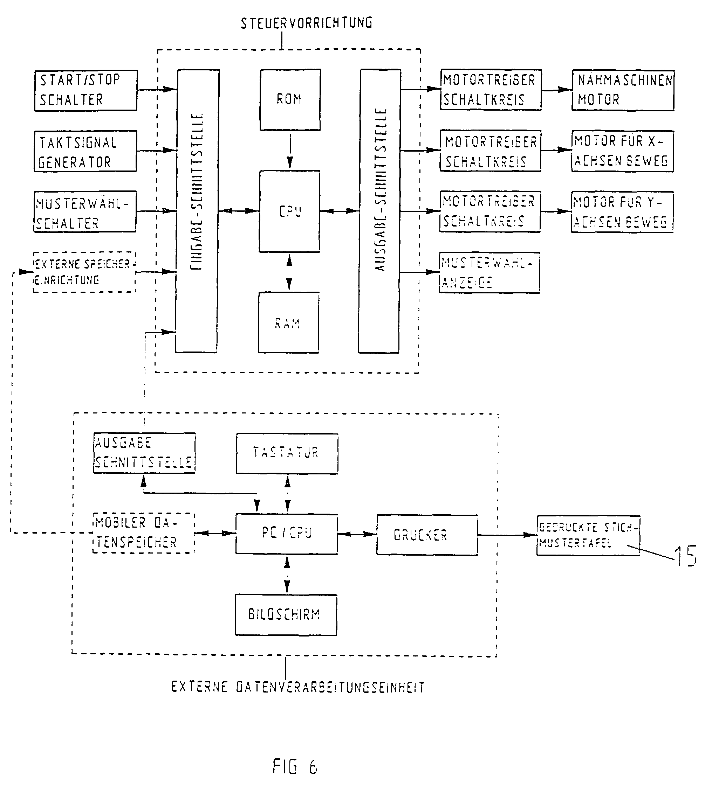

Figur 6 zeigt ein Blockdiagramm entsprechend Figur 5 der elektronischen Bausteine der Nähmaschine nach Figur 2 und einer zugeordneten externen Datenverarbeitungseinheit. Die elektronische Ausrüstung der Nähmaschinen entspricht im wesentlichen derjenigen gemäss Figur 5, doch fehlen einige Eingabe- und Steuermöglichkeiten. Als zugeordnete externe Datenverarbeitungseinheit kann wiederum vorzugsweise ein PC dienen, dem ein Drucker zugeordnet ist. In der beschriebenen Weise können mittels des PC die gewünschten zusätzlichen Stich- und Stichmusterdaten zusammengestellt und dann über die Ausgabeschnittstelle in den veränderbaren Speicher RAM der Nähmaschine eingespeichert werden. Die Eingabe kann über einen geeigneten Anschluss, z. B. den Anschluss 9 oder aber über eine verdeckte, nicht dargestellte Schnittstelle erfolgen. Zugleich wird mittels dieser Daten die Stichmustertafel 15 gemäss Figur 4 ausgedruckt, die dann an der Nähmaschine angebracht werden kann. Mittels eines mobilen Datenspeichers können aber die zusammengestellten Daten auch in den Speicher der Nähmaschine übergeführt werden, sofern die Nähmaschine über einen entsprechenden Leser verfügt. Ein derartiger mobiler Datenspeicher kann auch auf Bestellung aus einem Katalog von Nähmustern durch die Herstellerin der Nähmaschine zusammen mit der ausgedruckten Mustertafel geliefert werden, und die Daten können in die Nähmaschine eingespeichert werden.

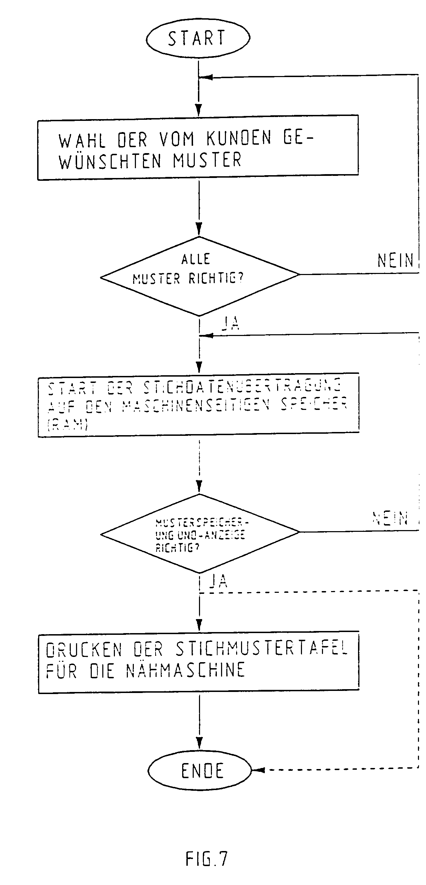

Figur 7 zeigt ein Flussdiagramm zur Darstellung der Vorgänge bei der Bereitstellung von Stichmusterdaten, deren Eingabe in den veränderbaren Speicher RAM der Nähmaschine und dem Ausdrucken der Stichmustertafel.

Die Nähmaschine gemäss Figur 2 kann allerdings auch so gestaltet sein, dass bei der Herstellung alle Speicherplätze, im vorliegenden Beispiel 30 Speicherplätze voll mit Stich- und Stichmusterdaten besetzt werden. Nachträglich können aber einige Daten, im vorliegenden Beispiel die Hälfte der Daten, ersetzt werden durch zusätzliche, individuell gewählte Daten.

Wie aus dem Obenstehenden hervorgeht, sind sehr viele Ausführungsvarianten vom einfachsten bis zum aufwendigsten Ausbaustand möglich. In vielen Fällen wird es genügen, an der Näh- oder Stickmaschine eine verdeckte Schnittstelle vorzusehen, die nur für Händler und Service-Personal zugänglich ist und über welche die gewünschten zusätzlichen Daten nach individuellen Wünschen eingespeichert werden können. Stichmustertafeln zum Anbringen an der Nähmaschine gemäss Fig. 3 und 4 könnten auch anschliessbaren Datenträgern, insbesondere den erwähnten Datenschlüsseln, zugeordnet sein, wobei verschiedenfarbige Ausführungen die Auswahl und Zuordnung erleichtern können.

## Patentansprüche

1. Verfahren zur Gestaltung des Datenspeichers einer elektronischen Nähmaschine mit Speicherplätzen für Stich- bzw. Stichmusterdaten, dadurch gekennzeichnet, dass die Nähmaschine mit einer Anzahl freier Speicherplätze für Stich- bzw. Stichmusterdaten hergestellt und ausgeliefert wird, dass eine Auswahl von zusätzlichen Stich- bzw. Stichmusterdaten bereitgestellt und Nähmaschinenbesitzern zugänglich gemacht wird und dass anhand dieser Auswahl der Datenspeicher der Nähmaschine durch einspeichern ausgewählter Daten ergänzt wird.

2. Verfahren nach Anspruch 1, dadurch gekennzeichnet, dass die zusätzlichen Daten mittels einer Datenverarbeitungseinheit, z.B. eines PC, vorbereitet und über eine Schnittstelle der Nähmaschine in dieselbe eingespeichert werden, wobei die Datenübermittlung direkt über Kabel oder mittels Datenträger, z.B. Karte, CD oder dergleichen erfolgt.

3. Verfahren nach Anspruch 1 oder 2, dadurch gekennzeichnet, dass mittels der zusätzlichen Daten eine Stick- bzw. Stichmustertafel ausgedruckt wird.

4. Verfahren nach einem der Ansprüche 1-3, dadurch gekennzeichnet, dass die zusätzlichen Stich- bzw. Stichmusterarten auf einem Bildschirm der Nähmaschine bzw. auf der an der Nähmaschine angebrachten Stich- bzw. Stichmustertafel angezeigt werden.

5. Verfahren nach einem der Ansprüche 1-4, dadurch gekennzeichnet, dass die zusätzlichen Daten einem Datenträger, z.B. einem CD-ROM oder einer Datenbank der Herstellerin oder eines anderen Anbieters entnommen werden, wobei die Auswahl anhand der Anzeige der Sticharten bzw. Stichmuster auf einer der Nähmaschinen zugeordneten Datenverarbeitungsanlagen, z.B. einem PC, oder auf dem Bildschirm der Nähmaschine erfolgt.

6. Nähausrüstung mit einer elektronischen Nähmaschine mit Mikroprozessor (CPU) und Speichern (ROM, RAM) aus welchen Stich- bzw. Stichmusterdaten zur Steuerung der Nähorgane abrufbar sind und mit mindestens einer Schnittstelle über welche Stich- bzw. Stichmusterdaten in den Speicher eingespeichert werden können, dadurch gekennzeichnet, dass der Speicher Speicherplätze (RAM) für mehrere, über die Schnittstelle eingebbare Stich- bzw. Stichmusterdaten aufweist, wobei diesen Speicherplätzen Anzeigestellen (10P,14) und Wählmittel (12) zugeordnet sind, dass mindestens ein Datenträger mit einer Auswahl von Stich- bzw. Stichmusterdaten verfügbar ist, und dass Mittel zum Auslesen von Daten aus diesem Datenträger und zum Einspeichern in freie Speicherplätze des Nähmaschinenspeichers vorhanden sind.

7. Nähausrüstung nach Anspruch 6, dadurch gekennzeichnet, dass der Speicher ROM-Speicherplätze aufweist die mit fest gespeicherten Daten besetzt sind, und dass der Speicher zusätzliche RAM-Speicherplätze aufweist in die zusätzliche Daten eingespeichert oder in denen bestehende Daten verändert werden können.

8. Nähausrüstung nach Anspruch 6 oder 7, dadurch gekennzeichnet, dass allen Speicherplätzen (ROM, RAM) Anzeigestellen (10F, 10V, 10P, 11, 14) zugeordnet sind, und dass Wählorgane (F, V, P, 12), z.B. Tasten, zur Wahl bestimmter Sticharten bzw. Stichmuster vorgesehen sind, wobei Mittel vorhanden sind, welche beim Einspeichern zusätzlicher Daten die Zuordnung der Anzeigestellen vornehmen.

9. Nähausrüstung nach Anspruch 6, gekennzeichnet durch Haltemittel zum Anbringen einer Stich- bzw. Stichmustertafel (15) mit den zusätzlichen Daten zugeordneten Darstellungen an der Nähmaschine.

10. Nähausrüstung nach Anspruch 9, dadurch gekennzeichnet, dass die Stich- bzw. Stichmustertafel (15) Durchbrechungen (12', 13') aufweist durch welche Leuchtanzeigen (13) und Wählorgane (12) der Nähmaschine sichtbar bzw. zugänglich sind.

11. Nähausrüstung nach einem der Ansprüche 6-10, gekennzeichnet durch einen Leser (8) für mit den zusätzlichen Daten versehene Datenträger, z.B. Floppy Discs oder CD-ROMs.

12. Nähausrüstung nach Anspruch 11, dadurch gekennzeichnet, dass die Nähmaschine mit Mitteln zur Anzeige, Auswahl und Einspeicherung zusätzlicher Daten ab einem Datenträger oder einem Netzwerk mit einem Angebot von Daten versehen ist.

13. Nähausrüstung nach einem der Ansprüche 6-12, gekennzeichnet durch einen Anschluss (7) für ein Eingabeorgan, z.B. eine Maus oder einen Leser (Scanner), wobei Mittel vorgesehen sind, um zusätzliche Daten bildlicher Darstellungen von Stichmustern einzuspeichern.

## Claims

1. Method for the configuration of the data memory of an electronic sewing machine which comprises storage locations for stitch and stitch pattern data, characterised in that the sewing machine is manufactured and supplied with a number of free storage locations for stitch and/or stitch pattern data, in that a selection of stitch resp. stitch pattern data is prepared and made available to the owners of the sewing machine, and in that the data memory of the sewing machine is completed on the base of this selection by entering selected data.

2. Method according to claim 1, characterised in that the additional data are prepared by means of a data processing unit, for example a personal computer, and entered into the memory of the sewing machine via an interface of the latter, the data transmission being effected directly by cables or by means of a data carrier such as card, a compact disk, or the like.

3. Method according to claim 1 or 2, characterised in that a stitch or stitch pattern chart is printed by means of the additional data.

4. Method according to any one of claims 1 to 3, characterised in that the additional stitch or stitch pattern types are displayed on a display of the sewing machine or on the stitch or stitch pattern chart attached to the sewing machine.

5. Method according to any one of claims 1 to 4, characterised in that the additional data are recalled from a data carrier, e.g. a CD-ROM or a data base of the manufacturer or of another supplier, the selection being made on the base of the display of the stitch types or the stitch patterns on a data processing installation associated to the sewing machine, e.g. a PC, or on the display of the sewing machine.

6. Sewing equipment comprising an electronic sewing machine including a microprocessor (CPU) and memories (ROM, RAM) from which stitch and stitch pattern data controlling the sewing elements can be recalled, and at least one interface allowing stitch and stitch pattern data to be stored into the memory, characterised in that the memory comprises storage locations (RAM) for a plurality of stitch or stitch pattern data which are capable of being entered via the interface, display locations (10P, 14) and selection means (12) being associated to these storage locations, in that at least one data carrier containing a selection of stitch resp. stitch pattern data is available, and in that means for recalling data from this data carrier and for storing them in free storage locations of the memory of the sewing machine are provided.

7. Sewing equipment according to claim 6, characterised in that the memory comprises ROM storage locations which are occupied by permanently stored data, and in that the memory comprises additional RAM storage locations in which additional data can be stored or existing data can be modified.

8. Sewing equipment according to claim 6 or 7, characterised in that display locations (10F, 10V, 10P, 11, 14) are associated to all memory locations (ROM, RAM), and in that selecting elements (F, V, P, 12), e.g. keys, are provided for selecting certain stitch types or stitch patterns, further means being provided which effect the allocation of display locations during the storage of additional data.

9. Sewing equipment according to claim 6, characterised by retaining means for the attachment to the machine of a stitch or stitch pattern chart (15) comprising representations associated to the additional data.

10. Sewing equipment according to claim 9, characterised in that the stitch or stitch pattern chart (15) comprises openings (12', 13') through which luminous displays (13) and selecting elements (12) of the sewing machine are visible or accessible, respectively.

11. Sewing equipment according to any one of claims 6 to 10, characterised by a reading unit (8) for data carriers containing the additional data, e.g. floppy disks or CD-ROMs.

12. Sewing equipment according to claim 11, characterised in that the sewing machine is provided with means for the display, the selection and the storage of additional data from a data carrier or a network providing a selection of data.

13. Sewing equipment according to any one of claims 6 to 12, characterised by a connector (7) for an input unit, e.g. a mouse or a scanner, means being provided for storing additional data of pictorial representations of stitch patterns.

## Revendications

1. Procédé pour la configuration de la mémoire d'une machine à coudre électronique qui comporte des emplacements de mémoire pour des données de points resp. de motifs de couture, caractérisé en ce que la machine à coudre est fabriquée et livrée avec un nombre d'emplacements de mémoire libres pour des données de points resp. de motifs de couture, qu'une sélection de données de points resp. de motifs de couture supplémentaires est préparée et rendue accessible aux propriétaires de la machine à coudre, et que la mémoire de la machine à coudre est complétée sur la base de cette sélection en introduisant les données sélectionnées.

2. Procédé selon la revendication 1, caractérisé en ce que les données supplémentaires sont préparées à l'aide d'une unité de traitement de données telle qu'un ordinateur personnel, par exemple, et introduites dans la machine à coudre par un interface de cette dernière, le transfert des données étant effectué directement par des câbles ou par l'intermédiaire de supports de données tels que des cartes, disques compacts ou autres.

3. Procédé selon la revendication 1 ou 2, caractérisé en ce qu'une table de motifs de broderie resp. de couture est imprimée à l'aide desdites données supplémentaires.

4. Procédé selon l'une des revendications 1 à 3, caractérisé en ce que les points resp. motifs de couture supplémentaires sont affichés sur un écran de la machine à coudre resp. sur ladite table de points resp. de motifs de couture attachée à la machine à coudre.

5. Procédé selon l'une des revendications 1 à 4, caractérisé en ce que les données supplémentaires proviennent d'un support de données, par exemple d'un CD-ROM ou d'une base de données du fabriquant ou d'un autre vendeur, la sélection étant effectuée à l'aide de l'affichage des points resp. motifs de couture sur une installation de traitement de données associée à la machine à coudre, par exemple un ordinateur personnel, ou sur l'écran de la machine à coudre.

6. Equipement de couture comprenant une machine à coudre munie d'un microprocesseur (CPU) et de mémoires (ROM, RAM) dans lesquelles les données relatives à des points resp. des motifs de couture pour la commande des organes de couture sont appelées, et d'au moins un interface permettant de mettre en mémoire des données de points resp. de motifs de couture, caractérisé en ce que la mémoire comporte des emplacements de mémoire (RAM) pour plusieurs données de points resp. de motifs de couture pouvant être introduites par l'intermédiaire de l'interface, lesdits emplacements de mémoire étant reliés à des zones d'affichage (10P, 14) et à des moyens de sélection (12) associés, en ce qu'au moins un support de données comprenant une sélection de données de points resp. de motifs de couture est disponible, et que des moyens permettant d'extraire des données de ce support de données et de les transférer dans des emplacements libres de la mémoire de la machine à coudre sont prévus.

7. Equipement de couture selon la revendication 6, caractérisé en ce que la mémoire comporte des emplacements de mémoire ROM occupés par des données mémorisées de manière permanente, et que la mémoire comporte des emplacements de mémoire RAM additionnels permettant d'introduire lesdites données supplémentaires ou de modifier des données existantes.

8. Equipement de couture selon la revendication 6 ou 7, caractérisé en ce que tous les emplacements de mémoire (ROM, RAM) comportent des affichages (10F, 10V, 10P, 11, 14) associés, et que des éléments de sélection (F, V, P, 12), par exemple des touches, sont prévus pour la sélection de certains points resp. motifs de couture, ainsi que des moyens effectuant l'attribution desdits affichages pendant l'introduction de données supplémentaires.

9. Equipement de couture selon la revendication 6, caractérisé par des moyens de fixation permettant la fixation à la machine d'une table (15) de points resp. de motifs de couture qui présente des représentations associées auxdites données supplémentaires.

10. Equipement de couture selon la revendication 9, caractérisé en ce que ladite table de points ou de motifs de couture (15) présente des ouvertures (12', 13') à travers lesquelles les affichages lumineux (13) et éléments de sélection (12) de la machine à coudre sont visibles resp. accessibles.

11. Equipement de couture selon l'une des revendications 6 à 10, caractérisé par un lecteur (8) de supports de données comportant lesdites données supplémentaires, par exemple des disquettes ou CD-ROMs.

12. Equipement de couture selon la revendication 11, caractérisé en ce que la machine à coudre comporte des moyens d'affichage, de sélection et d'introduction de données supplémentaires provenant d'un support de données ou d'un réseau offrant une sélection de données.

13. Equipement de couture selon l'une des revendications 6 à 12, caractérisé par un raccordement (7) pour un organe d'entrée tel qu'une souris ou un lecteur (scanner), des moyens permettant de mémoriser des données supplémentaires de représentations figuratives étant prévus.
